(19) **Europäisches Patentamt / European Patent Office / Office européen des brevets**

(11) **EP 2 148 299 B1**

(12) **EUROPEAN PATENT SPECIFICATION**

(45) Date of publication and mention
of the grant of the patent:
**11.07.2018 Bulletin 2018/28**

(51) Int Cl.:
***G06T 5/00*** *(2006.01)*

(21) Application number: **09009694.2**

(22) Date of filing: **27.07.2009**

(54) **Apparatus and method for producing improved quality signals**

Vorrichtung und Verfahren zum Erzeugen qualitätsverbesserter Signale

Appareil et procédé de production de signaux de qualité améliorée

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.07.2008 EP 08161222**

(43) Date of publication of application:
**27.01.2010 Bulletin 2010/04**

(73) Proprietor: **Nederlandse Organisatie voor toegepast-natuurwetenschappelijk onderzoek TNO 2595 DA 's-Gravenhage (NL)**

(72) Inventors:
• **van Eekeren, Adam Wilhelmus Maria 2593 ZC Den Haag (NL)**
• **Schutte, Klamer 2725 ES Zoetermeer (NL)**

(74) Representative: **V.O. P.O. Box 87930 2508 DH Den Haag (NL)**

(56) References cited:
**US-A1- 2008 170 802**

• **STANLEY OSHER, MARTIN BURGER, DONALD GOLDFARB, JINJUN XU, WOTAO YIN: "An Iterative Regularization Method for Total Variation-Based Image Restoration" SIAM MULTISCALE MODELING & SIMULATION, [Online] vol. 4, no. 2, 2005, pages 460-489, XP002550874 Retrieved from the Internet: URL:http://www.caam.rice.edu/~wy1/paperfil es/CU_IEOR_TR05-A4.PDF> [retrieved on 2009-10-16]**
• **BOGDAN KWOLEK ED - BARTLOMIEJ BELICZYNSKI ET AL: "Detail-Preserving Regularization Based Removal of Impulse Noise from Highly Corrupted Images" ADAPTIVE AND NATURAL COMPUTING ALGORITHMS; [LECTURE NOTES IN COMPUTER SCIENCE;;LNCS], SPRINGER BERLIN HEIDELBERG, BERLIN, HEIDELBERG, vol. 4432, 11 April 2007 (2007-04-11), pages 599-605, XP019093344 ISBN: 978-3-540-71590-0**

EP 2 148 299 B1

**Description**

Field of the invention

The invention relates to an apparatus and method that uses incoming signals to produce improved quality signals, such as improved image signals with position dependent pixel values.

Background

For image handling equipment such as cameras, television sets, image recording and image replay equipment it is desirable to produce improved quality images from incoming or stored images. Quality improvements may include increasing the resolution of the images, suppressing noise etc. One known quality improvement technique is called image reconstruction and involves searching for an improved image that results in a quality optimization according to a quality criterion expressed in terms of a sum of differences between pixel values of the incoming image and pixel values of the improved image plus a so-called regularization function. The quality criterion may take the form

$$\mathrm{Sum}\{R(P(r))\} + \mathrm{Sum}\,\{\,P'(r) - M(r)\,\}^{\,2}$$

Herein the sum is taken over the pixel positions "r" in the incoming image M that are used to improve the improved image P. R is the regularization function, which depends on a set of values of the improved image $P(r)$ for different pixel positions "r". $M(r)$ are pixel values of the incoming image and $P'(r)$ are pixel values of a version of the improved image that is used for comparison. In many applications $P'(r)$ may equal $P(r)$, but for example when the improved image $P(r)$ has a higher resolution than the incoming image M, $P'(r)$ may be a filtered and subsampled version of $P(r)$.

The regularization function is often needed because the improved information $P(r)$ contains more information (has more degrees of freedom) than the incoming image $M(r)$, with the result that the task of construction of the improved image $P(r)$ is ill posed. The regularization function provides for a criterion for optimal use of the additional degrees of freedom.

In known image reconstruction techniques the regularization function has been implemented as a sum of squares of total variation values for pixel locations in the improved image, summed over pixel locations in the improved image. The square of the total variation at a pixel location may be taken as the square of the gradient vector of the pixel values at that pixel location. However, this type of regularization function has been found to have the disadvantage that it is not robust to outliers (e.g. strongly erroneous pixel values in the incoming image) and that it has an unnecessarily smoothing effect on the improved image.

As an improvement has been suggested to implement the regularization function using a sum of absolute values of the total variation values for pixel locations in the improved image, instead of a sum of squares. This makes image reconstruction more robust against outliers, as the absolute value does not increase as strongly as the square. However, it has been found that this selection of the regularization function may still lead to sub-optimal reconstruction. A similar problem has been found when reconstruction is applied to sound signals,

Construction of a tomographic volume model is described in an article titled "Modeling anisotropic undersampling of magnetic resonance angiographies and reconstruction of a high-resolution isotropic volume using half-quadratic regularization techniques", by E. Roullot et al, published in Signal Processing, Elsevier, vol 84 no 4, pages 743-762, 2004 (EPO reference XP4495319). Roullot et al propose to use a conjugate gradient algorithm to search for an optimally reconstructed model. The conjugate gradient algorithm works well when it is used to optimize a function that nearly has a quadratic form. Roullot et al propose to use the so-called Huber function as a regularization function. The Huber function is a parabolic function of its argument for values of the argument that have a size of below a threshold value and a linear extension of this parabolic function for argument values of larger size.

The conjugate gradient algorithm that is used by Roullot et al has a limited speed of convergence. The optimization problem formulated by Roullot et al does not comply with the type of problem that is required by algorithms that provide for faster convergence, such as the Levenberg-Marquardt algorithm.

Construction of a tomographic volume model is also disclosed in an article titled "Constrained Total Variation Minimization and Application in Computerized Tomography" by Xiao-Qun Zhang et al, published in Energy minimization methods in computer vision and pattern recognition lecture notes in computer science, Springer, volume 3757, January 2005, pages 456-472 (EPO reference XP19024154) Zhang et al discuss minimization of total variation, giving a definition of total variation as a square root of a sum of a a square of the gradient of the reconstructed signal and a constant. As may be noted this function is not zero when the gradient is zero. Zhang et al propose to use a gradient descent algorithm.

The gradient descent algorithm that is used by Zhang et al has a limited speed of convergence. The optimization problem formulated by Zhang et al does not comply with the type of problem that is required by algorithms that provide for faster convergence, such as the Levenberg-Marquardt algorithm.

Another tomographic model construction method is disclosed in an article titled "Three-dimensional edge-preserving image enhancement for computed tomography" by N. Villain et al, published in the IEEE transactions on medical imaging, Vol 22 No. 10 pages 1275-1287 (EPO reference XP11101826). Villain et al. use quadratic optimization. They propose to use of a quadratic regularization function. No conditions are imposed on the value of the regularization function at the argument for which its derivative is zero. The optimization problem formulated by Villain et al. does not comply with the type of problem that is required by algorithms that provide for fast convergence, such as the Levenberg-Marquardt algorithm.

The use of the Levenberg-Marquardt algorithm for image restoration is mentioned in a publication by Stanley Osher et al., titled "An iterative regularization method for total variation based image restoration", published in Multiscale model simulation, Vol 4 No 2 page 460-489, purportedly in 2005 EPO reference XP002550874. Similarly, use of the Levenberg-Marquardt algorithm for image restoration is mentioned in a publication by Bogdan Kwolek, titled "Detail-Preserving Regularization Based Removal of Impulse Noise from Highly Corrupted Images", in ICANNGA 2007 Ed. B.Beliczynski et al., Part II LNCS 4432, pages 599-605 (2005) EPO reference XP019093344. Both documents discuss possible regularization terms in cost functions that can be used to find reconstructed images, by selecting a reconstructed image that minimizes the cost function. Osher et al.compare their methods with prior art Levenberg-Marquardt solutions. Kwolek proposes a regularization term that depends on the differences between reconstructed pixel values and input image values in a 4 point neighborhood of the reconstructed pixel. Kwolek mentions the possibility of using Levenberg-Marquardt to select the reconstructed image. The Levenberg-Marquardt algorithm is an example of an algorithm that uses an iteration process for solving an equation that a scalar product V*J=0 of a vector V and a derivative J of that vector V with respect to the reconstructed signal is zero. Conventionally, the vector V comprises vector components (M(r)-P(r)) corresponding to differences between values M(r) of a measured signal and predictions P(r) of the measured signal values derived from the reconstructed signal.

The iteration process of Levenberg-Marquardt uses a matrix $J^T J$ that is a scalar product of derivatives J of the vector V ($J^T$ is the transpose of J). For small changes "delta" of the reconstructed signal, the effect of the changes on the scalar product V*J can be approximated linearly by (V0+delta*$J^T$)J, where V0 and J have their values without accounting for the change delta. This can be used to determine iterative updates "delta". The Levenberg-Marquardt algorithm does so by solving delta from an equation delta*($J^T$J+lambda)= -V*J. Herein a convergence control term "lambda" has been added (notionally multiplied by a unit matrix), which does not affect the solution when V*J=0. The term lambda may be adapted arbitrarily without affecting the solution. Lambda may be set to zero. In this case, one obtains the Gauss-Newton algorithm.

In order for the iteration process to work, it is of course necessary that the components of the vector V depend on the reconstructed signal, i.e. that their derivatives with respect to the reconstructed signal are not zero. This is ensured by using components of the type (M(r)-P(r)) corresponding to differences between values M(r) of a measured signal and predictions P(r) of the measured signal values derived from the reconstructed signal. However, the Levenberg-Marquardt algorithm does not provide for a regularization.

Regularization could be introduced in the Levenberg-Marquardt algorithm by expanding the optimization criterion with a sum of squares of total variation values for pixel locations in the improved image, summed over pixel locations in the improved image. In the Levenberg-Marquardt algorithm this results in added components of the vector V that are proportional to the gradients. However this has the above-described disadvantage that it is not robust to outliers and that it has an unnecessarily smoothing effect on the improved image.

Summary

Among others, it is an object to provide for better improvement of signal quality, wherein a more quickly converging algorithm such as the Levenberg-Marquardt algorithm can be used to search for the reconstructed signal.

The invention is defined in independent claims 1, 8 and 14.

A signal processing method according to claim 1 is provided. Herein an incoming signal such as an image signal or a seismic signal for example, is used to compute a reconstructed signal. An iterative computation such as the Levenberg-Marquardt algorithm is used, wherein the vector V comprises second vector components V2 that are square roots of values obtained by applying a regularization function to measures of variation of the reconstructed signal as a function of the location.

For the regularization function a function is used that has a derivative of bounded size that varies continuously as a function of the measure of variation from zero at zero measure of variation.

In this way it is ensured that the vector components remain sensitive to changes in the reconstructed signal, while at the same time preventing undue effects of outliers.

A regularization function that varies proportionally to sqrt ($[grad P(r)]^2 + a^2$)-a may be used for example, wherein P(r) is the reconstructed signal and "a" is a parameter. For argument values grad I(r) with a size higher than the parameter "a" asymptotically linear variation is realized, so that the derivatives are bounded by zero and its asymptotic values. For argument values grad I(r) with a size lower than the parameter value "a" a continuous approximately square dependence on the size of grad I(r) is realized, with a derivative that goes to zero smoothly.

The use of a regularization function with bounded derivatives has been found to improve reconstruction of edges in the improved signal. In this way edge reconstruction problems are reduced compared with a quadratic regularization function of grad I(r). The gradual reduction of the derivative for small values of the measure of variation of the reconstructed image has been found to improve robust convergence to a unique improved image. In this way convergence problems with a function proportional to the absolute size of grad I(r), which would result in concentration of the entire change of the derivative at zero gradient of the reconstructed image, are prevented.

More generally, these advantages occur when the derivative of the regularization function with respect to the measure of variation is bounded and a regularization function is of a type wherein changes of the derivative of the function are concentrated at values of the measure of variation that are distributed over a finite interval of small values of the measure of variation. In the case of the function sqrt ([grad I(r)]$^2$ + a$^2$)-a for example, the interval is defined by the parameter "a". Given a percentage of change in the derivative over the entire range of arguments of the function, a finite interval proportional to "a" inherently follows that contains this percentage of the change. The finite interval with concentrated locations may be defined as the interval that comprises zero measure of variation, and in which a significant fraction, say at least one half, of the variation of the derivative of the regularization function occurs. Distribution of the change of derivative over this finite interval occurs when at all locations in the interval, or at least at a majority of the locations, the second derivative of the regularization function exceeds a finite minimum value that is not excessively less than (say not less than one tenth, and more preferably not less than half) a constant second derivative that would be required to account for the total change of the derivative in the interval. In the case of the regularization function sqrt ([grad I(r)]$^2$ + a$^2$)-a, the value of the parameter "a" determines the size of this interval.

In an embodiment the size of the interval wherein the change of the derivative of the regularization function is concentrated, i.e. if applicable the value of the parameter "a", is selected dependent on noise in the incoming signal. Thus the argument of the regularization function is scaled. In a further embodiment a size of this noise is estimated and the estimation is used to set the sizes of the interval, i.e. to adapt the scale factor of the argument of the regularization function, so that the interval contains at least a significant part of the noise, e.g. by setting the parameter "a" dependent on the noise amplitude, for example to three times the standard deviation of the noise in the gradient.

Brief description of the drawing

These and other objects and advantages will become apparent from a description of exemplary embodiments, using the following figures.

Figure 1 shows an image processing apparatus
Figure 2 shows a flow-chart of an algorithm for selecting changes of pixel values

Detailed description of exemplary embodiments

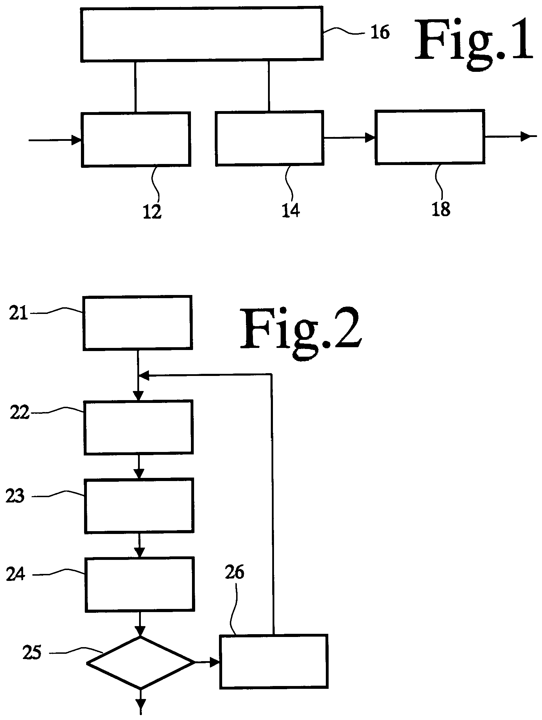

Figure 1 schematically shows an image processing apparatus, comprising a first image memory 12 for an incoming image, a second image memory 14 for a reconstructed image, a computation unit 16 for updates of the reconstructed image and an output driver 18 for using the reconstructed image to drive a display device (not shown). First image memory 12 is coupled to an input of the image processing apparatus. The input may be coupled to a camera (not shown) or other image capturing device. Second image memory 14 is coupled to an output of the image processing apparatus via output driver 19. Computation unit 16 has inputs coupled to first and second image memory 12, 14 and an output coupled to second image memory 14.

In operation image processing apparatus 10 receives an incoming image from its input and stores it in first image memory 12. Computation unit 16 uses the incoming image in an iterative computation of successive versions of an improved image, or improved image part, and to write these successive versions into second image memory 14.

The iterative computation aims to minimize a criterion for the improved image, or improved image part. In an embodiment, the criterion has the following form:

$$\text{Sum } [ (P'(r)\text{-}M(r))^2 ] + \text{Sum } [F( \text{grad } P(r) ]$$

Herein M(r) are the pixel values of the measured image in first image memory 12, P'(r) are the pixel values determined from the improved image P or improved image part in second image memory 14 and grad P(r) is a gradient vector of the pixel values of the improved image. The gradient vector may have components determine from to differences between the pixel value P(r) at the pixel location and pixel values at adjacent pixel locations in different directions, but instead a more complex filter function may be used to determine the gradient.

The sums are taken over pixel locations "r" (the first and second sum are not necessarily taken over the same sets of pixel locations: when P has higher resolution than M, the second sum may involve more pixel locations, for example).

Both the function F and its derivative vary continuously as a function of its argument. Continuous variation of a function over a range of argument values means that the variation decreases with decreasing size of the range and that for any small but non-zero variation a corresponding finite range can be indicated wherein the variation is smaller than that small but non-zero variation.

In an embodiment the function F applied to a symbolic vector variable x =(grad P(r)) takes the form

$$F(x) = c * (sqrt(x^2 + a^2) - a),$$

wherein a and c are parameters and sqrt is the square root function. This function should be contrasted with the conventional L2 norm, wherein $F(x)=x^2$ and the conventional L1 norm wherein $F(x)=|x|$. As may be noted F(x) has quadratic and linear asymptotic behaviour for small amplitude of "x" and for large amplitude respectively. Hence it asymptotically behaves like the L2 norm for small gradients and like the L1 norm for large gradients.

It should be noted that the derivative of this function $c*(sqrt(x^2+a^2)-a)$ is bounded, in contrast to the derivative of the L2 norm, which grows indefinitely in proportion to x. This results in better preservation of edges. Furthermore it should be noted that two argument regimes of behaviour of the function may be distinguished. The first regime covers an interval with small gradient values, including zero gradient, with a size significantly less than the parameter value "a". The second regime covers large gradient values, with a size significantly larger than the parameter value "a". In the interval with small gradient values, the function has a minimum (zero derivative) for zero size gradient and the first derivative increases gradually for gradients of increasing size. Thus, the changes of the derivative are approximately evenly distributed over the interval with small gradient values, in contrast to the L1 norm, where the change of derivative occurs only for zero measure of variation. This results in improved convergence properties for the iteration. In the second regime the first derivative has little variation, because the function approaches an asymptotically linear behaviour.

The parameter "a" that determines the size of the gradient at the transition between the two regimes may be selected dependent on noise amplitude, In an embodiment the parameter "a" is set to a value between the standard deviation of the noise and ten times the standard deviation, so that F behaves according to its small amplitude regime for the majority of the noise and according to its large amplitude regime for outliers.

The parameter "c" determines the relative weights given to getting a regularized image and to faithfulness to the incoming image M. The value of the parameter "c" may be chosen dependent on the application of the improved image P, with a lower value of a sharp but noisier improved image is needed and a higher value if a less noisy but also less sharp image is needed.

Computation unit 16 need not actually compute the value of the criterion. In an embodiment it suffices to compute derivatives of the criterion with respect to variations of the pixel values P(r) of the improved image. These derivatives may take the form

$$2*Sum[ (P(r)-M(r)) ] + Sum[ F'(\{ grad P(r') \}) *D(r,r') ]$$

Herein D(r,r') is the derivative of the gradient with respect to P(r) for those pixel locations r' where the gradient depends on P(r) (typically the pixel location r and a number of surrounding locations). The sum is taken over those pixel locations r'.

It should be noted that at least the term in the sum is non linear function of the pixel values of the improved image P(r), because F is not a linear function. The function serves to give different weights to gradients of different size. For large gradients the term in the sum becomes independent of the gradient and for small gradients it is becomes approximately linear in the gradient. Thus, the relative weight of different gradients is changed.

In another embodiment, the improved image P may have a higher resolution than the incoming image M. In this case the incoming image M(r') may be compared with a filtered and sub-sampled version P' (r") of the improved image. Setting the derivative of a pixel value of this version P' (r") with respect to the pixel value of the improved image P(r) equal to Q(r,r"), the derivatives with respect to the improved pixel values P(r) take the form

$$2*\text{Sum} \left[ (P'(r'')-M(r'))*Q(r,r'') \right]$$
$$+ \text{Sum} \left[ F'(\{ \text{grad } P(r') \}) *D(r,r') \right]$$

Herein the sums are taken over the locations r' and r''. Again it should be noted that at least the term in the sum is non linear function of the pixel values of the improved image P(r), because F is not a linear function.

In an embodiment computation unit 16 iteratively selects successive iterations of improved image values using Levenberg-Marquardt optimization. As is known per se Levenberg-Marquardt optimization provides for finding parameters that minimize a function of the type V*V, wherein V is a vector or components that depend on a vector of the parameters x whose values must be found. In the present case the parameters x are the image values P(r). The condition for the minimum can be expressed in terms of a Jacobian matrix J, with derivatives dVi/dx of the components Vi of the vector V with respect to the parameters x. The problem of finding an optimal set of parameters x can be expressed as a derivative equation V*J=0. Herein V and J depend on the parameters x.

The Levenberg-Marquardt algorithm and more special techniques such as Gauss-Newton provide for iterative updates of the parameter values to converge to a solution of the equation V*J=0. In the case of the Levenberg-Marquardt algorithm for example, the update "delta" to the parameter vector in an iteration is computed as a solution of the equation delta*$(J^TJ+\text{lambda}*I)$ = -V*J, wherein $J^T$ is the transpose of J, lambda is a control parameter and I is a unit matrix with the same dimensions as the product matrix $J^TJ$. Here the Jacobian J and the vector depend on the parameter vector x of the iteration. In other words, in each iteration a delta is selected that minimizes a quadratic function $(\text{delta}*J+V)^2+\text{lambda}*\text{delta}^2$.

In the present case, where added regularization terms are used, the vector V is expanded with additional components that are square roots of the regularization terms. Thus the vector will have a first set of components V1 that represent deviations from observed values M(r) and a second set of components V2 with square roots of regularization functions sqrt(F(grad P(r))). The Jacobian has components J1=dV1/dP(r) and J2=dV2/dP(r) so that the equation for the minimum is V1*J1+V2*J2=0. In the case of the Levenberg-Marquardt algorithm for example, the update "delta" to the parameter vector in an iteration is computed as a solution of the set of equations

$$\text{delta}*(J1^TJ1+ J2^TJ2+\text{lambda}*I) = -V1*J1-V2*J2,$$

Here V1*J1 represents a sum over the first set of vector components, that is over locations in the measured signal, summing products of vector components and derivatives. $J1^TJ1$ represents a sum of products of derivatives over that range. V2*J2 represents a sum of vector components and derivatives over the second set of vector components, that is over locations for which regularization terms are used. $J2^TJ2$ represents a sum of products of derivatives over that range.

In the case of image reconstruction the first set of components is defined by V1(r)=P(r)-M(r), or V1(r)=P'(r)-M(r) in the case of a higher resolution image P(r), and the second set of components is defined by V2(r)=sqrt(F(grad P(r)). When only a sub-image is reconstructed that is part of a larger image, these vector components are only needed for pixel locations in the sub-image or in the sub-image and band of the larger image that surrounds it. The corresponding components of the Jabobian for V1 are dV1(r1)/dP(r2)=1 if the pixel locations r1 and r2 are equal and zero otherwise, or

$$dV1(r1)/dP(r2)=Q(r2,r1)$$

in the case of a higher resolution image. The corresponding components of the Jabobian for V2 are

$$dV2(r1)/dP(r(2)=F'(\{ \text{grad } P(r2) \}) *D(r1,r2)/ (2*\text{sqrt}(F(\text{grad } P(r2)))$$

However, iterative techniques for solving the equation V1*J1+V2*J2=0 in this case have been found to work only if the regularization function F has zero value at argument values where its derivative is zero. Otherwise, the second set of vector components V2(r) would depend on the parameters in a way that makes the second set of vector components insensitive to small changes in the parameter values P(r), where there are no gradients. This would prevent stable convergence. The function $F(x)=c*(\text{sqrt}(x^2+a^2)-a)$ is an example of a function that ensures that this does not occur, because it is zero at the value x=0 for which its derivative $c*x/ \text{sqrt}(x^2+a^2)$ is zero. It has been found that this facilitates convergence in an iterative way to the solution of the equation V1*J1+V2*J2=0. Alternatively, the problem can be solved by other functions that have the same property. Preferably, the derivative F' of the regularization function divided by the square root of the regularization function should have a finite non zero value, also in the limit where the gradient of the reconstructed image approaches zero.

Computation unit 16 may use other known strategies to select successive versions of the improved image. For example, a set of changes of respective pixel values may be selected in proportion to the derivatives for those pixel values, or at least dependent on the derivatives. However, many of these other techniques do not provide for the same speed of convergence as the iterative solutions of the equation V*J=0.

Figure 2 shows a flow-chart of an exemplary algorithm for computing the improved image P or sub-image that is a part of a larger image. In a first step 21 computation unit 16 selects an initial version of the improved image P or sub-image that is a part of a larger image. An image with position independent pixel values may be used for example, or the result of previous processing may be used. In a second step 22, computation unit 16 computes the derivatives according to the expression discussed above, using the pixel values of the incoming image M(r) and the current version of the improved image P. In a third step 23, computation unit 16 computes the vector of update values "delta" for the improved image P by solving the equation delta*($J1^TJ1 + J2^TJ2 + \text{lambda}*I$) = -V1*J1-V2*J2 for "delta" based on the computed derivatives. The convergence factor lambda may be set differently in different iterations.

In a fourth step 24, computation unit 16 adds the updates "delta" to the current version of the improved image P or sub-image that is a part of a larger image, thus producing a next version of the improved image, or sub-image that is a part of a larger image. In a fifth step 25, computation unit 16 tests whether a convergence criterion is satisfied. A simple criterion may be to test whether a predetermined number of iterations has been performed, but alternatively a measure of convergence computed from the derivatives may be compared with a threshold value. In this case fifth step could be performed before third step 23. If the convergence criterion is satisfied, computation unit 16 terminates the iterative process and delivers the improved image. If the convergence criterion is not satisfied, computation unit 16 executes a sixth step 26, preparing a next iteration, for example by adjusting the factor to be used in third step 23, after which computation unit 16 repeats from second step 22 (when fifth step 25 is performed before third step 23 sixth step 26 may be executed after fourth step 24).

It should be emphasized that the algorithm of figure 2 is only one example of an algorithm for determining successive versions of the improved image based on the quality criterion that uses the function F. Other examples may include conjugate gradient optimization, etc. However, use of a Levenberg-Marquardt type algorithm increases the speed of convergence. The use of an optimization criterion of the form

$$\text{Sum } [ (P'(r)\text{-}M(r))^2 ] + \text{Sum } F( \{\text{grad } P(r)\} )$$

combined with a regularization function F of the form

$$F(x)=c^*(sqrt(x^2+a^2)\text{-}a),$$

Has the effect that edges in the image, for example at transitions between pixel locations foreground objects and background are imaged, will be better preserved than when a function $F(x)=x^2$ is used that increases more rapidly for large values of x. By selecting the value of the parameter "a" smaller than the smallest step size of the edges that should be reconstructed, for example at least three times smaller, the sharpness of these edges is preserved.

On the other hand, the function reduces the risk that the iteration process gets trapped in a local minimum, so that the initial image used in the iterations has a strong effect on the improved image. Compared to a function F(x)=|x| the risk of trapping is reduced already when the value of the parameter "a" is significantly larger (say at least three times larger) than the rounding error of the computation used to compute updates of the improved image. A higher value of the parameter "a" improves the speed of convergence and further reduces the risk of trapping.

In an embodiment a lower limit of the value of the parameter is set in proportion with the iteration step size. This improves concergence speed.

In an embodiment the value of the parameter is set proportional to an input indicating the minimum size of the steps that that should be reconstructed. In another embodiment such an input may be used to set an upper limit for the parameter.

In an embodiment the value of the parameter is set dependent on image noise produced by the source of the image, to a value of at least three times the standard deviation of the image noise and an upper limit less than one third of the smallest size edge that has to be reconstructed. Optionally, the parameter is set to an upper or lower limit if the value derived from the noise is past the upper or lower limit. In a further embodiment, a computation unit 16 is configured to determine an estimated noise amplitude of the incoming image. However, it is not necessary to use the image itself to estimate the noise amplitude, instead the noise amplitude of a further image or images of a series of images of which the incoming image is part may be estimated. The value of the parameter "a" is set dependent on the estimated noise amplitude, for example to at least three times the estimated noise amplitude. In a further embodiment the noise amplitude may be estimated from a spread of pixel values in an image segment without detected edges. This may be used to improve the speed of convergence.

It should be noted that various alternatives are possible for the term $F(\{\text{grad } P(r)\})$. For example one may use a function $F(x)=x^2/2a$ if $\text{abs}(x)<a$ and $F(x)=\text{abs}(x)-a/2$ if $\text{abs}(x)>a$, or a weighted function of $x^2/2a$ and $\text{abs}(x)-a/2$ with weights that gradually vanish for absolute values $\text{abs}(x)$ of the argument x above and below "a" respectively. As another example, instead of the function $F(x)=c*(\text{sqrt}(x^2+a^2)-a)$, which asymptotically grows in proportion to the absolute value of x for large x, a different function may be used that grows more slowly for large x. For example, a function that saturates at a finite value for large x may be used. By keeping the growth of $F(x)$ for large x limited to linear growth or less, edges in the incoming image $M(r)$ can be better preserved.

Similarly, various alternatives exist for the small argument behaviour of the function F. For example, a function

$$F(x)=c * x * \arctan(x/a)$$

may be used. Any continuously varying function F may be used that has a bounded derivative and approximately evenly distributed changes of its first derivative in an interval of small gradient sizes, from zero derivative at zero gradient wherein most of the changes of the derivative of F are concentrated. The bounded value of the derivative means that the derivative of the regularization function levels off somewhere in the range of possible gradient values (say by reaching a derivative value more than ninety percent of the maximum possible derivative at a measure of variation that is a fraction of the maximum possible measure of variation, say less than half that maximum possible measure of variation).

These changes of the derivative of the regularization function should occur concentrated in an interval of low gradient values of the improved image and distributed over that at least with a minimum amount of homogeneity over that interval, in the sense that in a significant part of the interval (say in at least half that interval) the size of the second derivative of the function is greater than a level proportional to the total variation of the size of the derivative in the low range from zero to its maximum size. The level may be equal to a tenth of a constant value of the second derivative that would be needed to account for the total variation in the interval. For example, in the case of $F(x)=\text{sqrt}(x^2+a^2)-a$, the derivative is $x/\text{sqrt}(x^2+a^2)$ which levels off to one for increasing x, so that the change of the derivative is concentrated in an interval determined by the parameter "a" (e.g. a fraction of $1/\text{sqrt}(2) > 70\%$ of the variation of the derivative is concentrated in the interval $0=x-a$). In this interval the second derivative $a^2/(x^2+a^2)^{3/2}$ has a non-zero value everywhere, exceeding a fraction of half of the constant derivative $1/a*\text{sqrt}(2)$ needed to provide the total variation from $0-1/\text{sqrt}(2)$ of the derivative in the interval.

As mentioned the interval in which the change of the derivative of the regularization function is concentrated should preferably contain the gradient values of the improved image that are due to rounding errors in the computation of the improved image and more preferably this interval should contain a significant part of the noise in the gradient due to noise (or signal variation in regions without relevant edges) in the incoming image. This improves convergence.

Although a function F dependent on the gradient $\text{grad}(P(r))$ has been used, it should be understood that other dependencies on the pixel values of the improved image may be used. For example, a function of the Laplacian instead of the gradient may be used. As long as the term with the function f adds weight against unnecessary variation of $P(r)$ as a function of pixel position, limits the weight assigned to large (edge-related) variation and varies continuously in a range of values corresponding to noise any term may be used.

Although an example has been given for a simple optimization criterion,

$$\text{Sum } [ (P'(r)-M(r))^2 ] + \text{Sum } F( \{\text{grad } P(r)\} )$$

it should be understood that a more complex criteria may be used. For example a term $f*\text{Sum}[(P(r)-P_o(r))^2]$ may be added, when the incoming images is used to augment an initial image $P_o$. The initial image may have been obtained using previously received incoming images.

Although an application to an iterative image reconstruction has been shown, it should be realized that alternatively other signals, a video signal, wherein P depends on both position and time, or a three dimensional signal such as a tomographic image signal, or audio signals may be improved or a time dependence of image signals can be improved in this way.

In an embodiment a signal processing method is used for generating a reconstructed, location dependent signal, comprising

- receiving an incoming signal represented by a set of signal values;
- iteratively computing successive versions of the reconstructed signal, guided by quality improvement according to a quality criterion for said versions that depends on aggregated differences between signal values of the incoming signal and corresponding signal values derived from the reconstructed signal added to a regularization function applied to a measure of variation of the reconstructed signal as a function of the location,
- wherein the regularization function has a derivative of bounded size that varies continuously as a function of the measure of variation from zero at zero measure of variation.

This provides for better improvement of signal quality.

In an embodiment a signal processing apparatus for generating a reconstructed, location dependent signal is provided, the signal processing apparatus comprising an input for receiving a measured incoming signal, a first image memory region for storing the incoming signal, a second image memory region for storing successive versions of an reconstructed image and a computation circuit, wherein the computation circuit is configured to

- iteratively compute successive versions of the reconstructed signal, guided by quality improvement according to a quality criterion for said versions that depends on aggregated differences between signal values of the incoming signal and corresponding signal values derived from the reconstructed signal added to a regularization function applied to a measure of variation of the reconstructed signal as a function of the location,
- wherein the regularization function has a derivative of bounded size that varies continuously as a function of the measure of variation from zero in the case of a zero measure of variation.

A regularization function may be used that varies in proportion to a difference between a square root of a sum of a square of the measure of variation plus a square of a parameter. A regularization function may be used that concentrates measure of variation dependent changes in the derivate of the regularization function in an interval of values of the measure of variation. In this case the method may comprise comprising receiving an input indicating a minimum step size that should be reconstructed and setting the size of said interval dependent on said input. This may be done for example by adapting the scale factor of the argument of the function. The interval preferably contains at least the standard deviation of the effect of noise in the incoming signal on the measure of variation. In an embodiment the noise amplitude of the signal, or of at least one further signal in a series of signals that comprises the signal, is measured and the regularization function is adapted (e.g. it scale factor is adapted) to set the size of the interval dependent on the measured noise amplitude. In an embodiment the signal processing method is applied to reconstruct an image signal from an incoming image signals.

## Claims

1. A signal processing method for generating a reconstructed, location dependent signal vector, using an iteration process for determining a solution of a vector equation that a product of a vector V and a matrix of derivatives of that vector V with respect to components of the reconstructed signal vector is zero, the vector V comprising first vector components V1 corresponding to differences between values of an incoming signal and predictions of the incoming signal values derived from the reconstructed signal and second vector components V2 that are square roots of values obtained by applying a regularization function to measures of variation of the reconstructed signal as a function of the location, the iteration process using a product matrix that is a scalar product of a transpose of the matrix of derivatives of the vector V with the matrix of derivatives, the method comprising

   - receiving the incoming signal represented by a set of signal values;
   - executing successive iterations of the iteration process (22-25), each iteration comprising solving (23) a respective update of the reconstructed signal from an equation for the respective update, wherein the update occurs in the equation multiplied by the product matrix;
   - wherein the regularization function has a derivative of bounded size that varies continuously as a function of the measure of variation from zero at zero measure of variation.

2. A signal processing method according to claim 1, wherein each of the successive iterations (22-25) comprises solving the respective update from an equation

$$\text{delta}*(J1^TJ1+J2^TJ2+\text{lambda}) = -V1*J1-V2*J2$$

wherein delta denotes the update of the reconstructed signal, J1 denotes a matrix of derivatives of the first vector components with respect to the signals values of the reconstructed signal at a set of locations in the reconstructed signal and J2 is a matrix of derivatives of the second vector components with respect to the signals values of the reconstructed signal at the set of locations in the reconstructed signal, lambda being a freely adjustable parameter, each second vector component corresponding to a term that is a square root of the regularization function of a gradient of the reconstructed signal at a respective different location in the reconstructed signal, the measure of variation being the gradient of the reconstructed signal.

3. A signal processing method according to claim 1 or 2, wherein the regularization function varies in proportion to a difference between a square root of a sum of a square of the measure of variation plus a square of a parameter.

4. A signal processing method according to any one of the preceding claims, wherein the regularization function that is used is a function of a type that concentrates measure of variation dependent changes in the derivative of the regularization function in an interval of values of the measure of variation, the method comprising receiving an input indicating a minimum step size of steps in the signal as a function of location that should be reconstructed and scaling the argument of the regularization function dependent on said input.

5. A signal processing method according to any one of the preceding claims, wherein the regularization function that is used is a function of a type that concentrates measure of variation dependent changes in the derivative of the regularization function in an interval of values of the measure of variation that contains at least the standard deviation of the effect of noise in the incoming signal on the measure of variation.

6. A signal processing method according to claim 4 or 5, comprising measuring the noise amplitude of the signal, or of at least one further signal in a series of signals that comprises the signal, and scaling the argument of the regularization function to set the size of the interval dependent on the measured noise amplitude.

7. A signal processing method according to any one of claims 1 to 6, wherein the incoming signal and the reconstructed signal are image signals, representing an image or a part of an image.

8. A signal processing apparatus for generating a reconstructed, location dependent signal vector, using an iteration process for determining a solution of a vector equation that a scalar product of a vector V and a matrix of derivatives of that vector V with respect to components of the reconstructed signal is zero, the vector V comprising first vector components V1 corresponding to differences between values of an incoming signal and predictions of the incoming signal values derived from the reconstructed signal and second vector components V2 that are square roots of values obtained by applying a regularization function to measures of variation of the reconstructed signal as a function of the location, the iteration process using a product matrix that is a product of a transpose of a matrix of derivatives of the vector V with the matrix of derivatives, the signal processing apparatus comprising

- an input for receiving a measured incoming signal,
- a first image memory region for storing the incoming signal,
- a second image memory region for storing successive versions of an reconstructed image and a computation circuit, wherein the computation circuit is configured to
- execute successive iterations of the iteration process, each iteration comprising solving a respective update of the reconstructed signal from an equation for the respective update, wherein the update occurs in the equation multiplied by the product matrix;
- wherein the regularization function has a derivative of bounded size that varies continuously as a function of the measure of variation from zero in the case of a zero measure of variation.

9. A signal processing apparatus according to claim 8, wherein the regularization function varies in proportion to a difference between a square root of a sum of a square of the measure of variation plus a square of a parameter.

10. A signal processing apparatus according to claim 8 or 9, wherein the regularization function that is used is a function of a type that concentrates measure of variation dependent changes in the derivative of the regularization function in an interval of values of the measure of variation, the apparatus having an input for receiving an input indicating a minimum step size of steps in the signal as a function of location that should be reconstructed, the computation circuit being configured to scale the argument of the regularization function dependent on said input to set the size of said interval.

11. A signal processing apparatus according to claim 8, wherein the regularization function that is used is a function of a type that concentrates measure of variation dependent changes in the derivative of the regularization function in an interval of values of the measure of variation that contains at least the standard deviation of the effect of noise in the incoming signal on the measure of variation.

12. A signal processing apparatus according to claim 10 or 11 wherein the computation circuit is configured to estimate the noise amplitude of the incoming signal or of at least one further signal in a series of signals that comprises the signal, and to adapt the regularization function to scale the argument of the regularization function dependent on the measured noise amplitude to set the size of said interval.

13. A signal processing apparatus according to any one of claims 8 to 12, comprising an image capturing device coupled to the first memory region for supplying the incoming signal, representing a captured image.

14. A computer program product, comprising a program of instructions that, when executed by a programmable computer, will cause the programmable computer to perform the method of any one of claims 1 to 7.


**Patentansprüche**

1. Signalverarbeitungsverfahren zur Erzeugung eines rekonstruierten, stellenabhängigen Signalvektors unter Verwendung eines Iterationsverfahrens zur Bestimmung einer Lösung für eine Vektorgleichung, dass ein Produkt eines Vektors V und einer Matrix von Ableitungen dieses Vektors V in Bezug auf Komponenten des rekonstruierten Signalvektors Null ist, der Vektor V umfassend erste Vektorkomponenten V1 entsprechend Differenzen zwischen Werten eines eingehenden Signals und Vorhersagen der eingehenden Signalwerte, abgeleitet von dem rekonstruierten Signal, und zweite Vektorkomponenten V2, die Quadratwurzeln von Werten sind, gewonnen durch Anwenden einer Regularisierungsfunktion auf Maße von Abweichung des rekonstruierten Signals abhängig von der Stelle, welches Iterationsverfahren eine Produktmatrix verwendet, die ein skalares Produkt einer Transponierte der Matrix von Ableitungen des Vektors V mit der Matrix von Ableitungen ist, das Verfahren umfassend

   - das Empfangen des eingehenden Signals, dargestellt durch einen Satz von Signalwerten;
   - das Ausführen aufeinander folgender Iterationen des Iterationsverfahrens (22-25), jede Iteration umfassend das Lösen (23) einer entsprechenden Aktualisierung des rekonstruierten Signals anhand einer Gleichung für die entsprechende Aktualisierung, wobei die Aktualisierung in der Gleichung, multipliziert mit der Produktmatrix, stattfindet;
   - wobei die Regularisierungsfunktion eine Ableitung von begrenzter Größe hat, die abhängig von dem Maß von Abweichung von Null bei null Maß von Abweichung kontinuierlich variiert.

2. Signalverarbeitungsverfahren nach Anspruch 1, wobei jede der aufeinanderfolgenden Iterationen (22-25) das Lösen der entsprechenden Aktualisierung anhand einer Gleichung

$$\text{Delta}*(\text{J1}^{\text{T}}\text{J1}+\text{J2}^{\text{T}}\text{J2}+\text{Lambda}) = -\text{V1}*\text{J1}-\text{V2}*\text{J2}$$

umfasst,
wobei Delta die Aktualisierung des rekonstruierten Signals bezeichnet, J1 eine Matrix von Ableitungen der ersten Vektorkomponenten in Bezug auf die Signalwerte des rekonstruierten Signals an einem Satz von Stellen in dem rekonstruierten Signal bezeichnet und J2 eine Matrix von Ableitungen der zweiten Vektorkomponenten in Bezug auf die Signalwerte des rekonstruierten Signals an dem Satz von Stellen ist, mit Lambda als einem frei einstellbaren Parameter, jede zweite Vektorkomponente entsprechend einem Begriff, der eine Quadratwurzel der Regularisierungsfunktion eines Gradienten des rekonstruierten Signals an einem entsprechenden anderen Stellen in dem rekonstruierten Signal ist, welches Maß von Abweichung der Gradient des rekonstruierten Signals ist.

3. Signalverarbeitungsverfahren nach Anspruch 1 oder 2, wobei die Regularisierungsfunktion mengenproportional zu einer Differenz zwischen einer Quadratwurzel einer Summe eines Quadrats des Maßes von Abweichung plus ein Quadrat eines Parameters ist.

4. Signalverarbeitungsverfahren nach einem der vorhergehenden Ansprüche, wobei die verwendete Regularisierungsfunktion abhängig ist von einem Typ, der vom Maß von Variation abhängige Veränderungen in der Ableitung von der Regularisierungsfunktion in einem Intervall von Wertes des Maßes an Abweichung konzentriert, das Verfahren umfassend das Empfangen einer Eingabe, die eine minimale Schrittgröße von Schritten in dem Signal abhängig von der Stelle angibt, die rekonstruiert werden soll, und das Skalieren des Arguments der Regularisierungsfunktion abhängig von der Eingabe.

5. Signalverarbeitungsverfahren nach einem der vorhergehenden Ansprüche, wobei die verwendete Regularisierungsfunktion abhängig ist von einem Typ, der vom Maß von Abweichung abhängige Veränderungen in der Ableitung der Regularisierungsfunktion in einem Intervall von Werten des Maßes von Abweichung, das mindestens die Standardabweichung der Auswirkung von Rauschen in dem eingehenden Signal enthält, auf das Maß von Abweichung konzentriert.

6. Signalverarbeitungsverfahren nach Anspruch 4 oder 5, umfassend das Messen der Rauschamplitude des Signals oder von mindestens einem weiteren Signal in einer Reihe von Signalen, die das Signal umfasst, und Skalieren des Arguments der Regularisierungsfunktion, um die Größe des Intervalls abhängig von der gemessenen Rauschamplitude einzustellen.

7. Signalverarbeitungsverfahren nach einem der Ansprüche 1 bis 6, wobei das eingehende Signal und das rekonstruierte Signal Bildsignale sind, die ein Bild darstellen oder ein Teil eines Bildes sind.

8. Signalverarbeitungseinheit zum Erzeugen eines rekonstruierten, stellenabhängigen Signalvektors unter Verwendung eines Iterationsverfahrens zur Bestimmung einer Lösung einer Vektorgleichung, dass ein skalares Produkt eines Vektors V und einer Matrix von Ableitungen von diesem Vektor V in Bezug auf Komponenten des rekonstruierten Signals Null ist, der Vektor V umfassend erste Vektorkomponenten V1 entsprechend Differenzen zwischen Werten eines eingehenden Signals und Vorhersagen der eingehenden Signalwerte, abgeleitet von dem rekonstruierten Signal, und zweite Vektorkomponenten V2, die Quadratwurzeln von Werten sind, gewonnen durch Anwenden einer Regularisierungsfunktion auf Maße von Abweichungen des rekonstruierten Signals abhängig von der Stelle, welches Iterationsverfahren eine Produktmatrix verwendet, die ein Produkt einer Transponierte einer Matrix von Ableitungen des Vektors V und der Matrix von Ableitungen ist, das Signalverarbeitungsverfahren umfassend

- einen Eingang zum Empfangen eines gemessenen eingehenden Signals,
- eine erste Bildspeicherregion zum Speichern des eingehenden Signals,
- eine zweite Bildspeicherregion zum Speichern aufeinander folgender Versionen eines rekonstruierten Bildes und einen Berechnungskreis, wobei der Berechnungskreis konfigurier ist, um
- aufeinander folgende Iterationen des Iterationsverfahrens auszuführen, jede Iteration umfassend das Lösen einer entsprechenden Aktualisierung des rekonstruierten Signals anhand einer Gleichung für die entsprechende Aktualisierung, wobei die Aktualisierung in der Gleichung, multipliziert mit der Produktmatrix, stattfindet;
- wobei die Regularisierungsfunktion eine Ableitung von begrenzter Größe hat, die abhängig von dem Maß von Abweichung von Null im Fall eines Null-Maßes von Abweichung kontinuierlich variiert.

9. Signalverarbeitungsvorrichtung nach Anspruch 8, wobei die Regularisierungsfunktion mengenproportional zu einer Differenz zwischen einer Quadratwurzel eines Quadrats des Maßes von Abweichung plus ein Quadrat eines Parameters variiert.

10. Signalverarbeitungsvorrichtung nach Anspruch 8 oder 9, wobei die verwendete Regularisierungsfunktion abhängig ist von einem Typ, der vom Maß von Abweichung abhängige Veränderungen in der Ableitung der Regularisierungsfunktion in einem Intervall von Werten des Maßes von Abweichung konzentriert, welche Vorrichtung einen Eingang hat, um eine Eingabe zu empfangen, die eine minimale Schrittgröße von Schritten abhängig von der Stelle, die rekonstruiert werden soll, angibt, der Berechnungskreis konfiguriert zum Skalieren des Arguments der Regularisierungsfunktion abhängig von der Eingabe, um die Größe dieses Intervalls einzustellen.

11. Signalverarbeitungsvorrichtung nach Anspruch 8, wobei die verwendete Regularisierungsfunktion abhängig ist von einem Typ, der vom Maß von Abweichung abhängige Veränderungen in der Ableitung der Regularisierungsfunktion in einem Intervall von Werten des Maßes von Abweichung, das mindestens die Standardabweichung der Auswirkung von Rauschen in dem eingehenden auf das Maß von Abweichung enthält, konzentriert.

12. Signalverarbeitungsvorrichtung nach Anspruch 10 oder 11, wobei der Kommunikationskreis konfiguriert ist zum Schätzen der Rauschamplitude des eingehenden Signals oder von mindestens einem weiteren Signal in einer Reihe von Signalen, die das Signal umfasst, und zum Anpassen der Regularisierungsfunktion, um das Argument der Regularisierungsfunktion abhängig von der gemessenen Rauschamplitude zu skalieren, um die Größe des Intervalls einzustellen.

13. Signalverarbeitungsvorrichtung nach einem der Ansprüche 8 bis 12, umfassend eine Bilderfassungsvorrichtung, gekoppelt an die erste Speicherregion zum Liefern des eingehenden Signals, das ein erfasstes Bild darstellt.

14. Computerprogrammprodukt, umfassend ein Programm von Befehlen, die, wenn sie von einem programmierbaren Computer ausgeführt werden, den programmierbaren Computer veranlassen, das Verfahren nach einem der Ansprüche 1 bis 7 auszuführen.

**Revendications**

1. Méthode de traitement de signal pour générer un vecteur de signal dépendant d'un emplacement reconstruit, en utilisant un processus d'itération pour déterminer une solution d'une équation vectorielle où un produit d'un vecteur V et d'une matrice de dérivées de ce vecteur V par rapport à des composantes du vecteur de signal reconstruit est nul, le vecteur V comprenant des premières composantes vectorielles V1 correspondant à des différences entre des valeurs d'un signal entrant et des prédictions des valeurs de signal entrant dérivées du signal reconstruit et des secondes composantes vectorielles V2 qui sont des racines carrées de valeurs obtenues en appliquant une fonction de régularisation à des mesures de variation du signal reconstruit en fonction de l'emplacement, le processus d'itération utilisant une matrice produit qui est un produit scalaire d'une transposée de la matrice de dérivées du vecteur V avec la matrice de dérivées, la méthode comprenant de

   - recevoir le signal entrant représenté par un ensemble de valeurs de signal ;
   - exécuter des itérations successives du processus d'itération (22-25), chaque itération comprenant la résolution (23) d'une mise à jour respective du signal reconstruit à partir d'une équation pour la mise à jour respective, la mise à jour ayant lieu dans l'équation multipliée par la matrice produit ;
   - dans laquelle la fonction de régularisation a une dérivée d'une taille délimitée qui varie continûment en fonction de la mesure de variation par rapport à zéro à une mesure de variation nulle.

2. Méthode de traitement de signal selon la revendication 1, dans laquelle chacune des itérations successives (22-25) consiste à résoudre la mise à jour respective à partir d'une équation

$$\text{delta}*(J1^{T}J1+J2^{T}J2+\text{lambda}) = -V1*J1-V2*J2$$

   dans laquelle delta désigne la mise à jour du signal reconstruit, J1 désigne une matrice de dérivées des premières composantes vectorielles par rapport aux valeurs de signaux du signal reconstruit à un ensemble d'emplacements dans le signal reconstruit et J2 est une matrice de dérivées des secondes composantes vectorielles par rapport aux valeurs de signaux du signal reconstruit à l'ensemble d'emplacements dans le signal reconstruit, lambda étant un paramètre librement ajustable, chaque seconde composante vectorielle correspondant à un terme qui est une racine carrée de la fonction de régularisation d'un gradient du signal reconstruit à un emplacement différent respectif dans le signal reconstruit, la mesure de variation étant le gradient du signal reconstruit.

3. Méthode de traitement de signal selon la revendication 1 ou 2, dans laquelle la fonction de régularisation varie proportionnellement à une différence entre une racine carrée d'une somme d'un carré de la mesure de variation plus d'un carré d'un paramètre.

4. Méthode de traitement de signal selon l'une quelconque des revendications précédentes, dans laquelle la fonction de régularisation qui est utilisée est une fonction d'un type qui concentre une mesure de variation dépendante de changements de la dérivée de la fonction de régularisation dans un intervalle de valeurs de la mesure de variation, la méthode consistant à recevoir une entrée indiquant une taille de pas minimum de pas dans le signal en fonction de l'emplacement qui devrait être reconstruit et à mettre à l'échelle l'argument de la fonction de régularisation dépendante de ladite entrée.

**5.** Méthode de traitement de signal selon l'une quelconque des revendications précédentes, dans laquelle la fonction de régularisation qui est utilisée est une fonction d'un type qui concentre une mesure de variation dépendante de changements de la dérivée de la fonction de régularisation dans un intervalle de valeurs de la mesure de variation qui contient au moins l'écart type de l'effet de bruit dans le signal entrant sur la mesure de variation.

**6.** Méthode de traitement de signal selon la revendication 4 ou 5, comprenant la mesure de l'amplitude de bruit du signal, ou d'au moins un autre signal dans une série de signaux qui comprend le signal, et la mise à l'échelle de l'argument de la fonction de régularisation pour établir la taille de l'intervalle dépendante de l'amplitude de bruit mesurée.

**7.** Méthode de traitement de signal selon l'une quelconque des revendications 1 à 6, dans laquelle le signal entrant et le signal reconstruit sont des signaux d'image, représentant une image ou une partie d'une image.

**8.** Appareil de traitement de signal pour générer un vecteur de signal dépendant d'un emplacement reconstruit, en utilisant un processus d'itération pour déterminer une solution d'une équation vectorielle où un produit scalaire d'un vecteur V et d'une matrice de dérivées de ce vecteur V par rapport à des composantes du signal reconstruit est nul, le vecteur V comprenant des premières composantes vectorielles V1 correspondant à des différences entre des valeurs d'un signal entrant et des prédictions des valeurs de signal entrant dérivées du signal reconstruit et des secondes composantes vectorielles V2 qui sont des racines carrées de valeurs obtenues en appliquant une fonction de régularisation à des mesures de variation du signal reconstruit en fonction de l'emplacement, le processus d'itération utilisant une matrice produit qui est un produit d'une transposée d'une matrice de dérivées du vecteur V avec la matrice de dérivées,
l'appareil de traitement de signal comprenant

- une entrée pour recevoir un signal entrant mesuré,
- une première région de mémoire d'image pour stocker le signal entrant,
- une seconde région de mémoire d'image pour stocker des versions successives d'une image reconstruite et un circuit de calcul, dans lequel le circuit de calcul est configuré pour

- exécuter des itérations successives du processus d'itération, chaque itération comprenant la résolution d'une mise à jour respective du signal reconstruit à partir d'une équation pour la mise à jour respective, la mise à jour ayant lieu dans l'équation multipliée par la matrice produit ;
- dans lequel la fonction de régularisation a une dérivée de taille délimitée qui varie continûment en fonction de la mesure de variation par rapport à zéro dans le cas d'une mesure de variation nulle.

**9.** Appareil de traitement de signal selon la revendication 8, dans lequel la fonction de régularisation varie proportionnellement à une différence entre une racine carrée d'une somme d'un carré de la mesure de variation plus d'un carré d'un paramètre.

**10.** Appareil de traitement de signal selon la revendication 8 ou 9, dans lequel la fonction de régularisation qui est utilisée est une fonction d'un type qui concentre une mesure de variation dépendante de changements de la dérivée de la fonction de régularisation dans un intervalle de valeurs de la mesure de variation, l'appareil ayant une entrée pour recevoir une entrée indiquant une taille de pas minimum de pas dans le signal en fonction de l'emplacement qui devrait être reconstruit, le circuit de calcul étant configuré pour mettre à l'échelle l'argument de la fonction de régularisation dépendante de ladite entrée pour établir la taille dudit intervalle.

**11.** Appareil de traitement de signal selon la revendication 8, dans lequel la fonction de régularisation qui est utilisée est une fonction d'un type qui concentre une mesure de variation dépendante de changements de la dérivée de la fonction de régularisation dans un intervalle de valeurs de la mesure de variation qui contient au moins l'écart-type de l'effet de bruit dans le signal entrant sur la mesure de variation.

**12.** Appareil de traitement de signal selon la revendication 10 ou 11, dans lequel le circuit de calcul est configuré pour estimer l'amplitude de bruit du signal entrant ou d'au moins un autre signal dans une série de signaux qui comprend le signal, et pour adapter la fonction de régularisation pour mettre à l'échelle l'argument de la fonction de régularisation dépendante de l'amplitude de bruit mesurée pour établir la taille dudit intervalle.

**13.** Appareil de traitement de signal selon l'une quelconque des revendications 8 à 12, comprenant un dispositif de capture d'image couplé à la première région de mémoire pour fournir le signal entrant, représentant une image capturée.

**14.** Produit de programme informatique, comprenant un programme d'instructions qui, lorsqu'il est exécuté par un ordinateur programmable, va amener l'ordinateur programmable à effectuer la méthode selon l'une quelconque des revendications 1 à 7.

Fig.1

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Modeling anisotropic undersampling of magnetic resonance angiographies and reconstruction of a high-resolution isotropic volume using half-quadratic regularization techniques. **E. ROULLOT et al.** Signal Processing. Elsevier, 2004, vol. 84, 743-762
- Constrained Total Variation Minimization and Application in Computerized Tomography. **XIAO-QUN ZHANG et al.** Energy minimization methods in computer vision and pattern recognition lecture notes in computer science. Springer, January 2005, vol. 3757, 456-472

- **N. VILLAIN et al.** Three-dimensional edge-preserving image enhancement for computed tomography. *IEEE transactions on medical imaging,* vol. 22 (10), 1275-1287
- **STANLEY OSHER et al.** An iterative regularization method for total variation based image restoration. *Multiscale model simulation,* 2005, vol. 4 (2), 460-489
- Detail-Preserving Regularization Based Removal of Impulse Noise from Highly Corrupted Images. **BOGDAN KWOLEK et al.** ICANNGA 2007. 2005, vol. 4432, 599-605